# EUROPEAN PATENT APPLICATION

(11) **EP 4 783 053 A1**
(43) Date of publication of application: **29.07.2026**
(21) Application number: 26153256.8
(22) Date of filing: 21.01.2026
(51) Int. Cl.: G06F 21/72, G06F 12/14, G06F 21/79

(54) **SECURE DATA DISTRIBUTION IN A MICROPROCESSOR-BASED SYSTEM-ON-CHIP HIDING SECRETS TO THE MICROPROCESSOR**

(30) Priority: 24.01.2025 US 202519037042
(71) Applicant: Avago Technologies International Sales Pte. Limited, Singapore 768923 (SG)
(72) Inventor: Loukianov, Dmitrii, Chandler, 85226 (US)
(74) Representative: Dilg, Haeusler, Schindelmann Patentanwaltsgesellschaft mbH

(57) **Abstract**

An example apparatus includes a circuit configured to implement a security function; a first memory configured to store first data comprising secrets; a processor configured to execute software, the software configured to execute instructions to read a secret from the first memory and supply the secret to the circuit; a second memory whose data is inaccessible to the software; and an interconnect coupled to the first memory, the second memory, the processor, and the circuit, the interconnect configured to receive the programmatic data transfer requests from the processor, read the secret from the first memory, write the secret to the second memory, read the secret from the second memory, and supply the secret to the circuit.

## Description

### BACKGROUND

Security can be an ubiquitous requirement in systems, such as automotive and internet-of-things (IoT) systems. The systems can implement encryption and authentication of communicated data and execute a combination of trusted and non-trusted software running on processors embedded in System-on-Chip (SoC) and multi-chip modules.

When performing security-related (e.g., cryptographic) operations, the systems should be flexible enough in handling and passing secret data elements ("secrets") such as keys under software control, while at the same time isolating the visibility of secrets from software. In such applications, the processor should flexibly select and route the transfer of secrets though common interconnect of the SoC while not exposing data values to any software. There is therefore a need for programmatically controlled secure data distribution in a microprocessor-based SoC.

### SUMMARY

In an embodiment, an apparatus includes a circuit configured to implement a security function. The apparatus includes a first memory configured to store first data comprising secrets. The apparatus includes a processor configured to execute software, the software configured to execute instructions to read a secret from the first memory and supply the secret to the circuit. The apparatus includes a second memory the content of which inaccessible to the software. The apparatus includes an interconnect coupled to the first memory, the second memory, the processor, and the circuit, the interconnect configured to receive the instructions from the processor, read the secret from the first memory, write the secret to the second memory, read the secret from the second memory, and supply the secret to the circuit.

In an embodiment, a method of secure transactions in a system-on-chip (SoC) includes executing, via software on a processor, instructions to read a secret from a first memory and supply the secret to a circuit in the SoC, the circuit configured to implement a security function, the first memory configured to store first data comprising secrets. The method includes receiving, via interconnect coupled to the processor, the first memory, the circuit, and a second memory inaccessible by the software, the instructions from the processor. These data transfers are originating from the processor executing standard (conventional) load and store instructions present in its native instruction set without modification of the processor. The method includes reading, via the interconnect, the secret from the first memory, writing, via the interconnect, the secret to the second memory, and reading, via the interconnect, the secret from the second memory; and supplying, via the interconnect, the secret to the circuit. The data involved in the transactions is modified (obfuscated) by the interconnect fabric or interface to the interconnect fabric in a way where the processor supplies source and destination addresses of the transactions, while the data in these transactions are not exposed to the processor.

### BRIEF DESCRIPTION OF THE DRAWINGS

Fig. 1 is a block diagram depicting a system-on-chip (SoC) according to some embodiments.
Fig. 2 is a block diagram depicting communication between components of a secure system according to some embodiments.
Fig. 3 is a block diagram depicting communication between components of a secure system according to some embodiments.
Fig. 4A is a flow diagram depicting a method of staging secret data in a secure system according to some embodiments.
Fig. 4B is a flow diagram depicting a method of transferring secret data to a secure function according to some embodiments.
Fig. 4C is a flow diagram depicting a method of executing a cryptographic operation in a secure system according to some embodiments.
Fig. 5 is a block diagram depicting communication between components of a secure system according to some embodiments.
Fig. 6 is a block diagram depicting communication between components of a secure system according to some embodiments.

### DETAILED DESCRIPTION

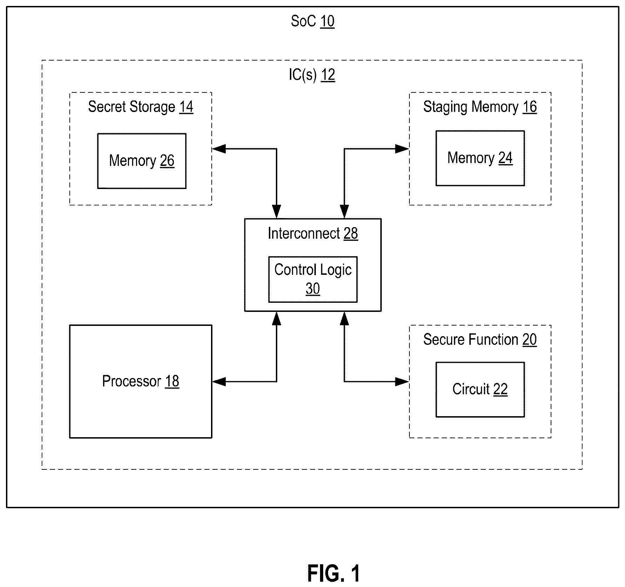

Fig. 1 is a block diagram depicting a system-on-chip (SoC) 10 according to some embodiments. A SoC may be integrated circuit(s) that implement components of an electronic system. SoC 10 can include one or more integrated circuits (ICs) 12. An IC may be an electronic device formed on a semiconductor substrate. IC(s) 12 can include secret storage 14, staging memory 16, a processor 18, a secure function 20, and interconnect 28. Secret storage may be any storage configured to store data intended to remain secret, such as security data, cryptographic data, and the like. Secret storage 14 can be implemented using memory 26. A memory may be a circuit configured to store data. Staging memory may be storage configured to store data read from secret storage 14 on a temporary basis for use during processing. Staging memory 16 can be implemented using memory 24 (e.g., RAM, register file or other type of memory). A processor may be a circuit configured to execute software to perform programmatically defined functions. A secure function may be a circuit configured to perform a function related to security, such as a cryptographic function. Secure function 20 can be implemented using a circuit 22. Memory 24, memory 26, processor 18, and circuit 22 can be coupled to interconnect 28. An interconnect may be a circuit configured to transfer data among electronic devices. Interconnect 28 transfers data among processor 18, circuit 22, memory 26, and memory 24. Interconnect 28 can include control logic 30. Control logic may be a circuit configured to provide transfer coordination and control functionality. Control logic 30 can provide control functionality for interconnect 28.

SoC 10 can implement a secure system. Secret storage 14 can be an element that stores secrets, such as cryptographic keys. A cryptographic key (key) may be data which, when processed through a cryptographic algorithm, can encode or decode other data. A cryptographic key can be a digital data, string or numbers, letters, or a combination thereof. Memory 26 can be read-only memory (ROM), random access memory (RAM), one-time programmable memory, or the like. A ROM may be a non-volatile memory that stores data that cannot be modified after manufacture. A RAM may be a volatile memory in which data can be written and from which data can be read. A one-time programmable memory may be a circuit that can be programmed with data once (e.g., data written) and then the data can thereafter only be read from the device. Memory 26 can include an input for receiving an address that selects a location of a secret to read or a location in which to write a secret. Memory 26 can include another input/output for providing secret data or receiving secret data. The address and data inputs of memory 26 can be coupled to interconnect 28.

Staging memory 16 can be an element of the secure system that can store, temporarily, secrets read from secret storage 14 or secrets generated by secure function 20. Secrets can be stored in staging memory 16 for any duration, but it is intended that such secrets are stored in staging memory 16 as needed and erased or overwritten when no longer needed.

Secure function 20 can be an element of the secure system that can accept secret(s) as input, source data as input, and can generate an output based on these inputs. For example, secure function 20 can receive encrypted data as source data, a key as secret data, and can generate decrypted data as output. In another example, secure function 20 can receive unencrypted data (also referred to as plaintext) as source data, a key as secret data, and can generate encrypted data as output. Circuit 22 can implement any type of cryptographic algorithm known in the art.

Processor 18 can be an element of the secure system that executes software. The software can supply source data to secure function 20. The software can programmatically request secure function 20 to perform its cryptographic function on the source data. In some embodiments, the some secrets used by secure function 20 must not be exposed to the software executing on processor 18. Processor 18 can select which secrets are to be used by secure function 20 during its processing but the secrets themselves are not exposed to the software executing on the processor 18. Secure function 20 can be designed in a way that it is very computationally intensive to find the secret input when the source and output are known (e.g., a typical assumption for cryptographic algorithms).

Interconnect 28 can be an element of secure system that transfers data among processor 18, secure function 20, secret storage 14, and staging memory 16. Interconnect 28 can deliver data based on addresses.

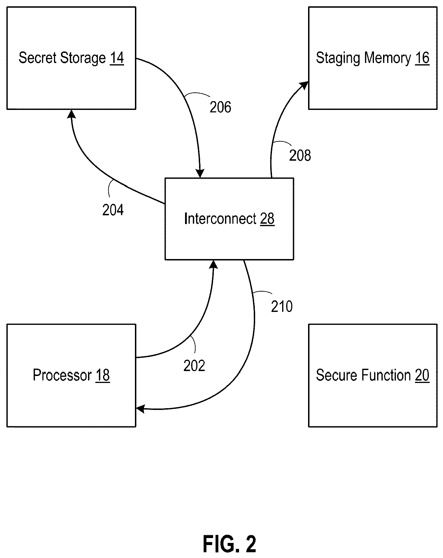

Fig. 2 is a block diagram depicting communication between components of a secure system according to some embodiments. In particular, Fig. 2 shows a transaction for requesting secret information according to some embodiments. The operation can start with 202, where processor 18 can request a secret from secret storage 14. For example, a programmer can write software with an instruction, such as Key[n] = Secret_Storage[n] to read the data from secret memory. That is, the programmer can request a nth key in an array Key to store a value in the nth secret in an array Secret_Storage. In somesystems, it will translate into a load instruction requesting reading the data from the secret storage and placing it in a working register of the move operation of processor 18, e.g., mov @sec_addr, Rn, where sec_addr can be a pointer to a location in secret storage 14 having Secret_Storage[n] and Rn is a register of processor 18, thus exposing the data to a program. If secret storage 14 were conventional memory attached to processor 18, such move operation may will result in the secret being stored in the register of processor 18. However, in the embodiments, the secrets read from secret storage 14 are not directly transferred to processor's register, and thus hidden from the software executing on processor 18. Processor 18 can supply the move operation to interconnect 28. Interconnect 28 can function such that the secret is not returned to processor 18 for storage in the register Rn. Rather, interconnect 28 can store the secret in staging memory 16. In embodiments, the contents of staging memory 16 is not accessible to software executing on processor 18. That is, the software executing on processor 18 cannot read or write to staging memory 16 in embodiments. In response to the move operation, interconnect 28 can also return some data to processor 18 for storage in the register Rn (210). The returned data should not be the secret, but rather some other value (e.g., a designated value, a random value, etc.). At step 204, interconnect 28 can read the secret from secret storage 14 in response to the move operation of processor 18. At step 206, interconnect 28 can receive the secret from secret storage 14. At step 208, interconnect 28 can store the secret in staging memory 16.

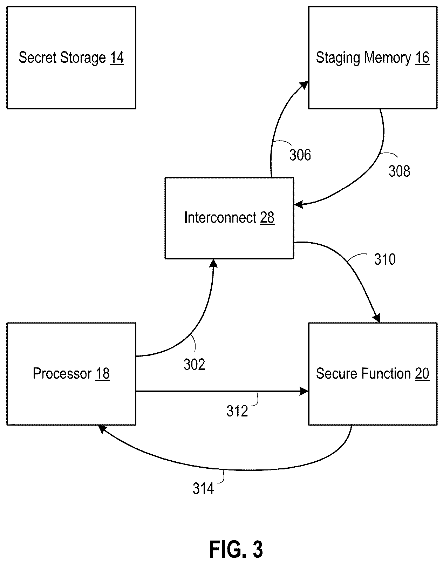

Fig. 3 is a block diagram depicting communication between components of a secure system according to some embodiments. In particular, Fig. 3 shows a transaction for transferring a staged secret to a secure function according to some embodiments. The operation can start with 302, where processor 18 can transfer the staged secret to secure function 20. The programmer can write Secure_Key = Key[n], which can translate into another move operation of processor 18: mov Rn, @sec_core. This move operation can instruct data stored in the register Rn of processor 18 to be moved to secure function 20 (e.g., mapped into the address space of processor at the address sec_core). In a conventional arrangement, this would result in data stored in the register being transferred to secure function 20 (e.g., stored in another register of secure function 20). However, in the embodiments, the register Rn in processor 18 does not store the secret as discussed above. Rather, the secret is stored in staging memory 16 (e.g., a staged secret). Interconnect 28 can receive the transfer request from processor 18 (302) resulting from store instruction. Interconnect 28 can then read the secret from staging memory 16 (306). Interconnect 28 can receive the secret from staging memory 16 (308). Interconnect 28 can then supply the secret to secure function 20 (310). Conversely, the processor 18 can directly supply source data to secure function 20 (312). For example, the programmer can write CipherText = Encrypt(Plaintext). This instruction can result in some plaintext being transferred to secure function 20 for execution of the cryptographic algorithm. Secure function 20 can return generated data to processor 18 (314). Interconnect 28 can ensure that the secret is not exposed to the software executing on processor 18. That completes the operation, where the plain text supplied by processor was encrypted with not exposed encryption key and result of encryption was returned to the processor for further use in program. This flow is flexible as the software handles all the data, and secure because the encryption key is selected by program, but not exposed to it. While the processor has both plaintext and encrypted versions of the data exposed, it is still very secure as the robust encryption algorithm is resistant to deriving the key even when both input and corresponding output of the algorithm are known.

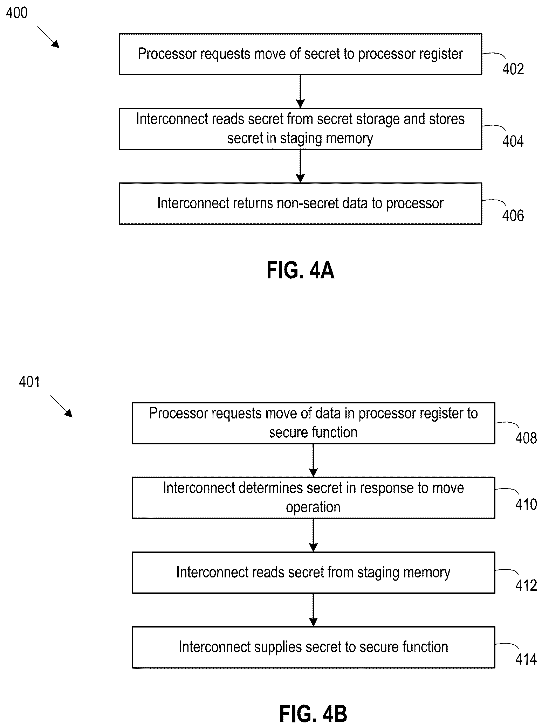

Fig. 4A is a flow diagram depicting a method 400 of staging secret data in a secure system according to some embodiments. Method 400 begins at step 402, where processor 18 requests a move of the secret to a processor register. In an embodiment, processor 18 executes a move instruction. A source of the move instruction can be an address in secret storage 14 and a destination of the move instruction can be a register in the processor. At step 404, interconnect 28 reads the secret from secure storage 14 and stores the secret in staging memory 16. Interconnect 28 can replace the destination of the move instruction with an address in staging memory 16. At step 406, interconnect 26 returns non-secret replacement data to processor 18. The non-secret data is any data other than the secret (e.g., designated value, random data, etc.). In an embodiment, the non-secret data can include a data integrity check data (e.g., a checksum). The data integrity check data can be used to verify the move instruction was completed and that the data in the secret memory was not corrupted. In an embodiment, the non-secret data can include status of the move instruction (e.g., success, failure, etc.).

Fig. 4B is a flow diagram depicting a method 401 of transferring secret data to a secure function according to some embodiments. Method 401 begins at step 408, where processor 18 requests a move of data in a processor register to secure function 20. In an embodiment, processor 18 executes a move instruction. A source of the move instruction can be a register in processor 18 and a destination of the move instruction can be an address mapped to secure function 20. At step 410, interconnect 28 determines which secret is referenced by the move operation (e.g., based on the referenced register). Interconnect 28 can replace the source from the move instruction with an address in staging memory 16. In some embodiments, the address in staging memory 16 can be encoded in a field of the register referenced in the move instruction. At step 412, interconnect 28 reads the secret from staging memory 16. At step 414, interconnect 28 supplies the secret to secure function 20.

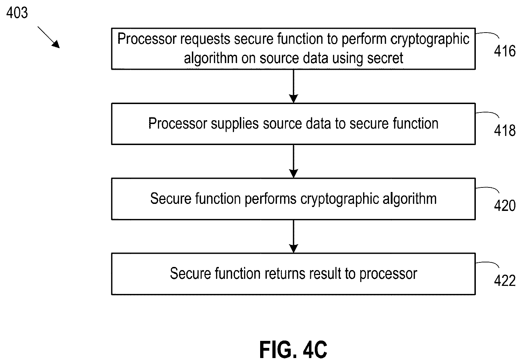

Fig. 4C is a flow diagram depicting a method 403 of executing a cryptographic operation in a secure system according to some embodiments. Method 403 begins at step 416, where processor 18 requests secure function 20 to perform a cryptographic operation on source data using the secret. In embodiments, processor 18 can execute one or more instructions to supply the source data to secure function 20 and invoke its cryptographic function. At step 418, processor 18 can supply the source data to secure function 20. At step 420, secure function 20 can perform the cryptographic algorithm. At step 422, secure function 20 can return the result to processor 18.

The implementation of secure transactions on SoC 10 can isolate secure and insecure (plaintext) transactions if they use different routes in interconnect 28. However, some interconnects may not provide different routes and wires for secure and insecure transactions. In addition, a designer may also want to enforce access policies per functional unit to allow transactions to be initiated only by specific requestors. The requestors can include, for example, active bus masters (e.g., processors, direct memory access (DMA) controllers, etc.). Interconnect 28 can identify the requestor, its security context (e.g., trust level), and execution thread or channel number in multi-context devices. The transactions may be "colored" by inclusion of attributes such as processor or bus master identifier (ID), execution trust level, virtual machine ID, task identifier, or the like. The attributes may be encoded in user attribute fields of the transactor's interface.

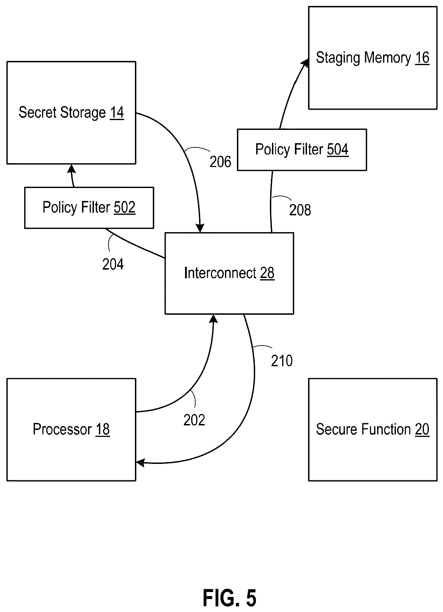

Fig. 5 is a block diagram depicting communication between components of a secure system according to some embodiments. In particular, Fig. 5 shows a transaction for requesting secret information using policy filters according to some embodiments. Elements that are the same or similar to those of Fig. 2 are designated with identical reference numerals and described in detail above. In the embodiment, control logic 30 in interconnect 28 can implement a policy 502 when reading secrets from secret storage 14 in response to transactions from processor 18. Policy 502 can allow or deny the transaction based on security attributes. For example, policy 502 can allow the transactions if originated from processor 18 and disallow the transactions if originated from another bus master (e.g., another processor). In another example, policy 502 can allow the transaction if originated from one thread executing on processor 18 and disallow the transactions if originated from another thread on processor 18. In another example, policy 502 can allow the transaction if originated from a thread associated with one virtual machine (VM) and disallow the transaction if originated from a thread associated with another VM. As noted above, the transactions can be colored in the interconnect fabric by inclusion of various attributes and policy filter 502 can allow/disallow the transactions based on such attributes. Likewise, control logic 30 can implement a policy 504 for writing secrets to staging memory 16 to limit the access per individual bus masters. Policy filter 504 can function similarly to policy filter 502.

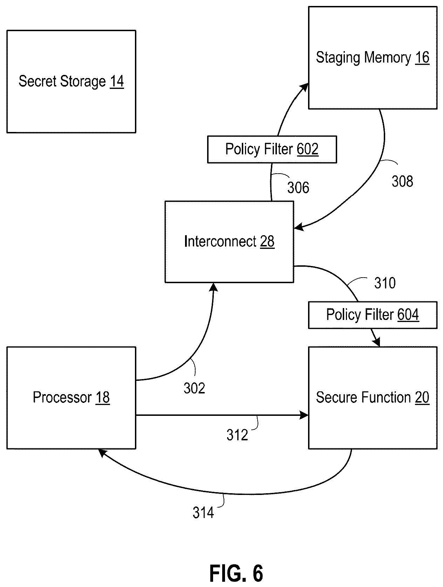

Fig. 6 is a block diagram depicting communication between components of a secure system according to some embodiments. In particular, Fig. 6 shows a transaction for transferring a staged secret to a secure function with policy filters according to some embodiments. Elements that are the same or similar to those of Fig. 2 are designated with identical reference numerals and described in detail above. In embodiments, control logic 30 of interconnect 28 can implement policy 602 for allowing/disallowing transactions that read secrets from staging memory 16 for transfer to secure function 20. Control logic 30 can implement policy 604 for allowing/disallowing transactions that transfer secrets from staging memory 16 to secure function 20. Policy filters 602 and 604 can operate similar to policy filters 502 and 504 described above.

In some embodiments, the policy filters can allow/disallow transactions based on security attributes, granting access to only intended initiators. For example, secure secret transfers to secure function 20 can be permitted only when the requester is staging memory 16 (e.g., secrets are supplied to secure function 20 only when coming from staging memory 16). The embodiments allow a modular system that uses a common interconnect but isolates in hardware secure and non-secure transactions. Processor 18 can have freedom of selecting which secrets, when and in what order are used in the program flow, and that gives the option to introduce new security related algorithm in the system without changing hardware. In some embodiments, secure function 20 may contain internal staging memory to store intermediate results for chained operations, and use the data either from external staging memory or integrated intermediate staging memory as input for security operations. In some embodiments, secure function 20 may contain a plurality of algorithmic building blocks (e.g., S-boxes, Galois field multipliers, permutations, etc.) that can be selected explicitly by control processor.

The secure data transfer protected with security attributes and policy filters may be expanded through the interconnect including inter-chip or inter-chiplet communication through common interconnect. The same approach to re-route and substitute data transactions when security-related resources are accessed by processors across chip boundary is applicable. However, the inter-chip links are more easily observable and vulnerable to security attacks. Therefore, the transactions across chip boundaries can be obfuscated and protected by some level of encryption with the unique, per chip keys.

While some processes and methods having various operations have been described, one or more embodiments also relate to a device or an apparatus for performing these operations. The apparatus may be specially constructed for required purposes, or the apparatus may be a general-purpose computer selectively activated or configured by a computer program stored in the computer. Various general-purpose machines may be used with computer programs written in accordance with the teachings herein, or it may be more convenient to construct a more specialized apparatus to perform the required operations.

As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items. By way of example, the phrases "at least one of A, B, and C" or "at least one of A, B, or C" each refer to only A, only B, or only C; and/or any combination of A, B, and C. In instances where it is intended that a selection be of "at least one of each of A, B, and C ," or alternatively, "at least one of A, at least one of B, and at least one of C," it is expressly described as such.

It will be understood that, although the terms "first," "second," etc. may be used herein to describe various elements, these elements should not be limited by these terms. These terms are only used to distinguish one element from another. For example, a first element could be termed a second element, and, similarly, a second element could be termed a first element, without departing from the scope of the present disclosure.

Although one or more embodiments of the present invention have been described in some detail for clarity of understanding, certain changes may be made within the scope of the claims. Accordingly, the described embodiments are to be considered as illustrative and not restrictive, and the scope of the claims is not to be limited to details given herein but may be modified within the scope and equivalents of the claims. In the claims, elements and/or steps do not imply any particular order of operation unless explicitly stated in the claims.

Boundaries between components, operations, and data stores are somewhat arbitrary, and particular operations are illustrated in the context of specific illustrative configurations. Other allocations of functionality are envisioned and may fall within the scope of the invention. In general, structures and functionalities presented as separate components in exemplary configurations may be implemented as a combined structure or component. Similarly, structures and functionalities presented as a single component may be implemented as separate components. These and other variations, additions, and improvements may fall within the scope of the appended claims.

## Claims

1. An apparatus, comprising:
a circuit configured to implement a function, the function having a secret as input;
a first memory configured to store first data comprising secrets;
a processor configured to execute software, the software configured to execute instructions to read the secret from the first memory and supply the secret to the circuit;
a second memory inaccessible to the software; and
an interconnect coupled to the first memory, the second memory, the processor, and the circuit, the interconnect configured to receive the instructions from the processor, read the secret from the first memory, write the secret to the second memory, read the secret from the second memory, and supply the secret to the circuit.

2. The apparatus of claim 1, wherein
the instructions comprise a first instruction having a source of a first address in the first memory and a destination of a register in the processor, and a second instruction having a source of the register and a destination of the circuit.

3. The apparatus of claim 2, wherein
the interconnect is configured to replace the destination address from the first instruction with a second address in the second memory and replace the source of the second instruction with the second address.

4. The apparatus of claim 3, wherein
the interconnect is configured to replace the destination address from the first instruction using attributes of the first address.

5. The apparatus of claim 4, wherein
the attributes of the first address comprise one or more bits unused by an address or data interface of the first memory.

6. The apparatus of any one of the claims 2 to 5, wherein
the processor is configured to receive, via the interconnect, second data not including the first data in response to the first instruction.

7. The apparatus of claim 6, wherein
the second data comprises data configured to check data integrity.

8. The apparatus of claim 7, wherein
the software includes a data integrity check to process the second data.

9. The apparatus of any one of the claims 1 to 8, wherein
the instructions include one or more third instructions for supplying source data to the circuit and invoking the function;

10. The apparatus of claim 9, wherein
the function comprises a security function that processes the source data based on the secret.

11. A method of secure transactions in a system-on-chip, SoC, comprising:
executing, via software on a processor, instructions to read a secret from a first memory and supply the secret to a circuit in the SoC, the circuit configured to implement a function having the secret as input, the first memory configured to store first data comprising secrets;
receiving, via interconnect coupled to the processor, the first memory, the circuit, and a second memory inaccessible by the software, the instructions from the processor;
reading, via the interconnect, the secret from the first memory;
writing, via the interconnect, the secret to the second memory;
reading, via the interconnect, the secret from the second memory; and
supplying, via the interconnect, the secret to the circuit.

12. The method of claim 11, wherein
the instructions comprise a first instruction having a source of a first address in the first memory and a destination of a register in the processor, and a second instruction having a source of the register and a destination of the circuit;
wherein in particular
the interconnect is configured to replace the destination of the first instruction with a second address in the second memory and replace the source of the second instruction with the second address;
wherein further in particular
the interconnect is configured to replace the destination of the first instruction using attributes of the first address;
wherein furthermore in particular
the attributes of the first address comprise one or more bits unused by an address interface of the first memory.

13. The method of claim 12, wherein
the processor is configured to receive, via the interconnect, second data not including the first in response to the first instruction;
wherein in particular
the second data comprises a data configured to check data integrity.

14. The method of any one of the claims 11 to 13, wherein
the instructions include one or more third instructions for supplying source data to the circuit and invoking the function;
wherein in particular
the function comprises a security function that processes the source data based on the secret.

15. A system-on-chip, SoC, comprising:
at least one integrated circuit, IC, the at least one IC including an apparatus as set forth on any one of the preceding apparatus claims.
